# EUROPÄISCHE PATENTSCHRIFT

(11) **EP 0 715 972 B1**
(45) Veröffentlichungstag und Bekanntmachung des Hinweises auf die Patenterteilung: **07.10.1998**
(21) Anmeldenummer: 95890197.7
(22) Anmeldetag: 09.11.1995
(51) Int. Cl.: B60C 11/03, B60C 11/04, B60C 11/12

(54) **Fahrzeugreifen**
Vehicle tyre
Bandage pneumatique pour véhicule

(30) Priorität: 09.12.1994 AT 2294/94
(43) Veröffentlichungstag der Anmeldung: 12.06.1996
(73) Patentinhaber: Semperit Reifen Aktiengesellschaft, A-2514 Traiskirchen (AT)
(72) Erfinder: Peschel, Wolfgang, D.I., A-1070 Wien (AT)
(74) Vertreter: Vinazzer, Edith, Dipl.-Ing.

(56) Entgegenhaltungen:
- EP-A- 0 524 568
- EP-A- 0 609 195
- DE-U- 8 628 836

## Beschreibung

Die vorliegende Erfindung betrifft einen Fahrzeugreifen, insbesondere für den Einsatz unter winterlichen Fahrbedingungen, mit einem Laufstreifenprofil, welches durch in Umfangsrichtung verlaufende Nuten und durch Quernuten zumindest in ein Mittelband, je eine Mittelblockreihe und je eine Schulterblockreihe gegliedert ist, die jeweils mit einer Vielzahl von untereinander parallel angeordneten Lamellenfeineinschnitten versehen sind.

Fahrzeugluftreifen mit derartigen Laufstreifenprofilen haben sich in den letzten Jahren in unterschiedlichen Ausführungsvarianten im Einsatz unter winterlichen Fahrbedingungen gut bewährt. Eine Anzahl von Patenten und Patentanmeldungen ist dabei auch auf die detailliertere Ausgestaltung von Laufstreifenprofilen mit Lamellenfeineinschnitten gerichtet. So ist etwa ein Fahrzeugluftreifen der eingangs genannten Art aus der AT-B 390.916 bekannt. Winterreifen, die gemäß dieser Patentschritt gestaltet sind, sind seit einigen Jahren mit großem Erfolg auf dem Markt und besitzen sehr ausgewogene Winterfahreigenschaffen. Es hat sich jedoch herausgestellt, daß bei diesen bekannten Reifen eine Verbesserung im Naßverhalten und generell im Fahrverhalten wünschenswert wäre.

Ein weiterer Fahrzeugluftreifen der eingangs genannten Art ist aus der DE-U-8 628 836 bekannt. Dieser Reifen besitzt ein dreifach geteiltes Laufstreifenprofil, bei dem diagonal in S-Form vorliegende Blockpaare durch eine Mittelrippe mit Mittelrille unterteilt sind, wobei an diese Rippe beidseitig umfangsorientiert verlaufende Mittenblöcke anschließen. Die Mittenblöcke sind von der Rippe durch Entlüftungsrillen, die geringe Tiefe und Breite besitzen, getrennt.

Die Erfindung hat sich zur Aufgabe gestellt, die bekannten Reifen insbesondere hinsichtlich des Wasserableitvermögens und hinsichtlich des Fahrverhaltens, was unter anderem das Ansprechen auf Lenkkräfte und die Kurvenstabilität mitumfaßt, zu verbessern.

Gelöst wird die gestellte Aufgabe erfindungsgemäß dadurch, daß die Blöcke jeder Mittelblockreihe durch eine Nut/Einschnittkombination an das ihnen benachbarte Mittelband gekoppelt sind, wobei jede Nut über mindestens die Hälfte der Kantenlänge des betreffenden Blockes verläuft und an jede Nut, in gleiche Richtung wie diese verlaufend, der wesentlich schmälere Einschnitt anschließt, welcher eine Breite von 1 bis 2 mm und eine Tiefe von mindestens 1 mm besitzt.

Die erfindungsgemäße Nut/Einschnittkombination zwischen den Blöcken der mittleren Blockreihen und dem benachbarten Mittelband hat insbesondere die Vorteile, daß einerseits durch die teilweise Trennung durch Nuten ein sehr gutes Wasserableitvermögen gewährleistet ist und andererseits durch die durch die Einschnitte bewirkte Ankopplung gegenüber dem bekannten Reifen nach dem Stand der Technik eine wesentliche Verbesserung im Fahrverhalten erzielt wird.

Die Ankopplung erhöht vor allem die Stabilität des Laufstreifenprofiles im Mittelbereich, was sich auf das Fahrverhalten sehr günstig auswirkt, insbesondere das Ansprechverhalten des Profiles auf Lenkkräfte, die erzielbare Kurvenstabilität und die Geradeauslaufstabilität. Die Verbesserung im Fahrverhalten hat sich insbesondere auch unter winterlichen Fahrbedingungen, etwa auf schneeigem Untergrund, feststellen lassen.

Um im Laufstreifenmittelbereich eine gute Abstimmung zwischen dem Wasserableitvermögen und der gewünschten Stabilität zu erzielen ist es von Vorteil, wenn zwei durch eine Umfangsnut voneinander getrennte Mittelbänder vorgesehen sind, deren Breite jeweils 5 bis 8 % der Breite des Reifens in der Bodenaufstandsfläche entspricht.

In diesem Zusammenhang ist es ferner günstig, wenn die Länge der die Blöcke der Mittelblockreihen vom benachbarten Mittelband trennenden Nuten bis zu 2/3 der entsprechenden Kantenlänge des jeweiligen Blockes beträgt.

Für eine gute Kraftübertragung beim Bremsen und beim Beschleunigen auf winterlichen Fahrbahnen ist es ferner günstig, wenn die in jedem Mittelband des Laufstreifens verlaufenden Feineinschnitte zumindest im wesentlichen in Profilquerrichtung orientiert sind.

Es ist weiters von Vorteil, wenn die in den Blöcken der Schulterblockreihen verlaufenden Feineinschnitte ebenfalls zumindest im wesentlichen in Profilquerrichtung verlaufen und insbesondere mit der Reifenäquatorlinie einen Winkel einschließen, der zwischen 90 und 70° beträgt. Eine solche Anordnung wirkt sich insgesamt auf das Fahrverhalten günstig aus.

Nach einem weiteren Merkmal der Erfindung verlaufen die Feineinschnitte in den Blöcken der Mittelblockreihen gegensinnig zu den Feineinschnitten in den Schulterblockreihen und schließen mit der Äquatorlinie einen Winkel ein, der zwischen 60 und 80° beträgt. Eine derartige Anordnung ist für gute Seitenführungseigenschaften eines Reifen mit einem solchen Profil von Vorteil.

Für eine ausgewogene Gesamtblocksteifigkeit in den Schulterblöcken sowie einen gleichmäßigen Abrieb in diesen Profilbereichen ist es günstig, wenn jene Feineinschnitte in den Blöcken der Schulterblockreihen, die den die Quemuten begrenzenden Blockkanten benachbart sind, zu diesen Blockkanten in einem Abstand verlaufen, der insbesondere um das 1,1- bis 1,4-fache größer ist, als der gegenseitige Abstand der innerhalb dieser Blöcke verlaufenden Feineinschnitte.

Gemäß einer bevorzugten Ausführungsform der Erfindung wird das erfindungsgemäß gestaltete Profil als laufrichtungsgebundenes Profil ausgeführt, wobei der Verlauf der Quernuten derart gewählt wird, daß ein gepfeiltes Profilmuster gebildet wird und beim Abrollen des Reifens die Einschnitte vor den Nuten in die Kontaktfläche mit dem Untergrund eintreten. Für ein laufrichtungsgebunden gestaltetes Profil ist diese Anordnung beim Bremsen auf Schnee von Vorteil.

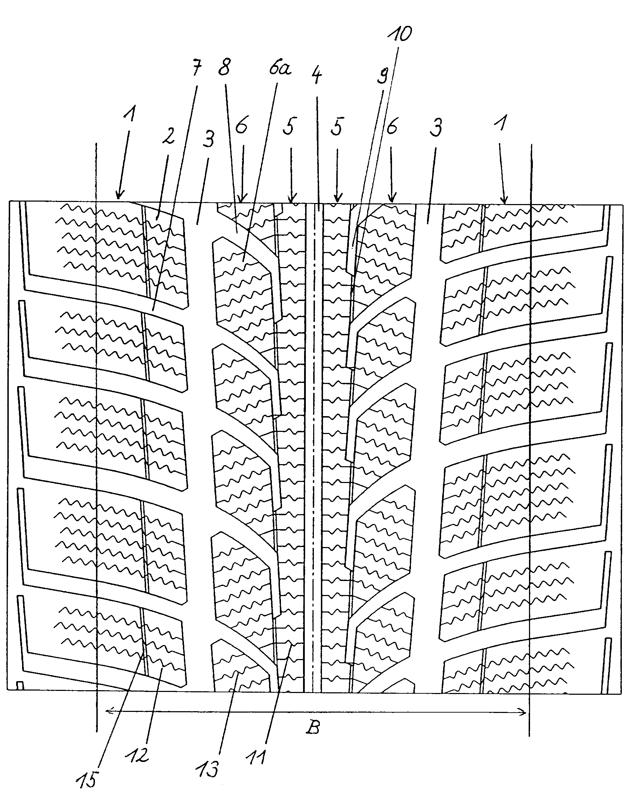

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines Laufstreifenprofiles dargestellt.

Das in der Zeichnungsfigur gezeigte Laufstreifenprofil ist insbesondere für PKW-Winterreifen geeignet. Die nun folgende Beschreibung bezieht sich auf die Breite B des Laufstreifenprofiles, die der Breite in der Bodenaufstandsfläche des Reifens (gemäß E.T.R.T.O.-Standards) entspricht.

Dabei handelt es sich bei dem dargestellten Laufstreifenprofil um ein sogenanntes laufrichtungsgebunden gestaltetes Profil. Das Laufstreifenprofil setzt sich aus je einer Schulterblockreihe 1, je einer Mittelblockreihe 6, die durch je eine breite Umfangsnut 3 von einer der Schulterblockreihen 1 getrennt sind, und die an je ein Mittelband 5 in noch zu beschreibender Weise gekoppelt ist, und einer entlang der Reifenäquatorlinie verlaufenden geraden Mittelumfangsnut 4 zusammen.

Die Blöcke 2 der Schulterblockreihen 1 sind in Umfangsrichtung durch Quernuten 7, die Blöcke 6a der Mittelblockreihen 6 durch Quernuten 8 voneinander getrennt. Der Verlauf der Quernuten 7, 8 ist bei diesem Ausführungsbeispiel so gewählt, daß sie ausgehend von den Mittelbändern 5 kontinuierlich bis über die Laufstreifenränder (Breite B) verlaufen, wobei durch den Verlauf der Quernuten 7, 8 in den beiden Laufstreifenhälften ein üblicherweise als gepfeilt bezeichnetes Profilmuster entsteht, das für viele laufrichtungsgebundene Laufstreifenprofile typisch ist.

Jeder Block 6a der Mittelblockreihen 6 ist durch eine Nut/Einschnittkombination vom benachbarten Mittelband 5 getrennt und gleichzeitig an dieses gekoppelt. Dabei verläuft jede Nut 9 über mindestens die Hälfte, insbesondere über etwa zwei Drittel, der Kantenlänge des betreffenden Blockes 6a. An die Nut 9 schließt ein Einschnitt 10 an, welcher eine Breite von 1 bis 2 mm und eine Tiefe von mindestens 1 mm besitzt. Die maximale Tiefe beträgt bis zu 70 % der Dessintiefe, bevorzugt 50 % der Dessintiefe, die im allgemeinen 8 mm beträgt, so daß die oben erwähnte Ankopplung an das Mittelband 5 erhalten bleibt. Die Anordnung ist dabei so getroffen, daß beim Abrollen des Reifens die Einschnitte 10 zuerst in die Kontaktfläche mit dem Untergrund eintreten.

Die Breite jedes Mittelbandes 5 beträgt zwischen 5 und 8 % der Breite B und sollte aus Stabilitätsgründen nicht unterhalb des Minimalwertes liegen.

Sämtliche Profilelemente des Laufflächenprofiles, also Blöcke und Bänder sind jeweils mit einer Vielzahl von parallel verlaufenden Feineinschnitten versehen. Dabei sind sämtliche dargestellten Feineinschnitte zick-zack- oder wellenförmig gestaltet, wobei darauf hingewiesen wird, daß anstelle der dargestellten Zick-zack-Form auch eine abweichende Form gewählt werden kann, beispielsweise ein gerader Verlauf der Feineinschnitte, welcher ggf. auch mit der Wellen- bzw. Zickzack-Form kombiniert sein kann. Sämtliche Feineinschnitte besitzen eine Breite von 0,3 bis 0,8 mm, insbesondere von 0,4 mm, und können mit sich ändernder Tiefe gestaltet werden.

Die Feineinschnitte 11 in den beiden Mittelbändern 5 verlaufen dabei in Reifenquerrichtung, das heißt, ihre Mittellängsachsen schließen mit der Reifenäquatorlinie einen Winkel von 90° ein, dieser Winkel kann jedoch geringfügig von 90° abweichen, ohne daß die Funktionsweise der Feineinschnitte 11 davon beeinträchtigt wird.

Die in den Blöcken 2 der Schulterblockreihen 1 angeordneten Feineinschnitte 12 haben einen Verlauf, der ebenfalls geringfügig von der exakten Profilquerrichtung abweicht, wobei die Anordnung so getroffen ist, daß diese Feineinschnitte 12 parallel zu jenen Blockkanten verlaufen, die die Quemuten 8 begrenzen. Der Winkel, den die Feineinschnitte 12 mit der Reifenäquatorlinie einschließen wird in einem Bereich von 70 bis 90° gewählt.

Die Blöcke 6a der Mittelblockreihen 6 besitzen eine zumindest im wesentlichen parallelogrammförmige Gestalt, die sich aus dem bereits geschilderten Verlauf sämtlicher Nuten ergibt. Die Feineinschnitte 13 in den Blöcken 6a sind nun so angeordnet, daß sie parallel zueinander, gegenläufig zum Verlauf der Quemuten 8 und etwa normal zu jener Blockdiagonalen verlaufen, die mit der Reifenäquatorlinie einen Winkel kleiner als 50° einschließt. Mit der Äquatorlinie schließen die Feineinschnitte 13 einen Winkel ein, der ca. 70° beträgt. Dieser Winkel kann in einem gewissen Bereich variiert wer-den, insbesondere zwischen 60 und maximal 80°. Damit ist gewährleistet, daß in diesen Laufstreifenbereichen die auf die exakte Profilquerrichtung projezierte Summenlänge der Feineinschnitte 13 größer ist, als wenn diese Feineinschnitte parallel zu den die Quemuten 8 begrenzenden Kanten angeordnet wären.

Erwähnt sei ferner, daß die die breiten Umfangsnuten 3, die Nuten 9 und Einschnitte 10 begrenzenden Blockkanten der Blöcke 2 und der Blöcke 6a nicht exakt parallel zur Reifenäquatorlinie, sondern gegenüber dieser unter einem vergleichweise kleinem Winkel von ca. 3 bis 6° verlaufen. Auch diese Maßnahme hat einen günstigen Einfluß auf das Traktionsverhalten auf schneeigem Untergrund.

Aus Geräuschgründen ist es ferner von Vorteil, wenn die Feineinschnitte 12 in den Blöcken 2 der Schulterblockreihen 1 durch gesonderte schmale Nuten entlüftet werden. Im dargestellten Ausführungsbeispiel sind diese Entlüftungsnuten 15 als die Blöcke 2 im wesentlichen in Umfangsrichtung durchquerende Nuten ausgebildet, die eine Breite von ca. 1 mm und eine Tiefe von ca. 1 bis 2 mm besitzen. Dabei ist es auch möglich, in den Blöcken der beiden Mittelblockreihen ebenfalls Entlüftungsnuten vorzusehen oder in den Blöcken der Schulterblockreihen mehr als eine Entlüftungsnut pro Block anzuordnen.

Wie schon erwähnt ist es für eine ausgewogene Gesamtprofilsteifigkeit günstig, wenn die Abstände der in den einzelnen Blöcken angeordenten Feineinschnitte in allen Blöcken möglichst gleich bzw. annähernd gleich gewählt wird. Dabei ist es von Vorteil, wenn in den Schulterblöcken 2 jene Feineinschnitte 12, die den Blockkanten benachbart sind, zu diesen Blockkanten in einem Abstand verlaufen, der größer ist, insbesondere zwischen 1,1- bis 1,4-Mal größer ist, als der gegenseitige Abstand der Feineinschnitte 12 untereinander. Diese Abstände sind jeweils von den Mittellängsachsen der zick-zack-förmigen Feineinschnitte 12 zu betrachten.

Die Erfindung ist auf das dargestellte Ausführungsbeispiel nicht eingeschränkt. So ist es vor allem möglich, ein erfindungsgemäß gestaltetes Profil auch laufrichtungsungebunden zu gestalten, am einfachsten dadurch, indem eine der beiden Laufstreifenhälften gegenüber der Reifenachse gespiegelt vorliegt, wobei die sonstige Ausgestaltung des Profiles unverändert erhalten bleibt. Anstelle der beiden Mittelbänder kann auch eine Ausgestaltung mit nur einem zentralen Mittelband gewählt werden.

## Patentansprüche

1. Fahrzeugreifen, insbesondere für den Einsatz unter winterlichen Fahrbedingungen, mit einem Laufstreifenprofil, welches durch in Umfangsrichtung verlaufende Nuten (3,4) und durch Quernuten (7,8) zumindest in ein Mittelband (5), je eine Mittelblockreihe (6) und je eine Schulterblockreihe (1) gegliedert ist, die jeweils mit einer Vielzahl von untereinander parallel angeordneten Lamellenfeineinschnitten (11, 12, 13) versehen sind, dadurch gekennzeichnet, daß die Blöcke (6a) jeder Mittelblockreihe (6) durch eine Nut/Einschnittkombination (9, 10) an das ihnen benachbarte Mittelband gekoppelt sind, wobei jede Nut (9) über mindestens die Hälfte der Kantenlänge des betreffenden Blockes (6a) verläuft und an jede Nut (9), in gleiche Richtung wie diese verlaufend, der wesentlich schmälere Einschnitt (10) anschließt, welcher eine Breite von 1 bis 2 mm und eine Tiefe von mindestens 1 mm besitzt.

2. Fahrzeugreifen nach Anspruch 1, dadurch gekennzeichnet, daß die Tiefe der Einschnitte (10) bis zu 70 % der Dessintiefe, insbesondere 50 % der Dessintiefe, beträgt.

3. Fahrzeugreifen nach Anspruch 1 oder 2, dadurch gekennzeichnet, daß zwei durch eine Umfangsnut (4) voneinander getrennte Mittelbänder (5) vorgesehen sind, deren Breite jeweils 5 bis 8 % der Breite (B) des Reifens in der Bodenaufstandsfläche entspricht.

4. Fahrzeugreifen nach einem der Ansprüche 1 bis 3, dadurch gekennzeichnet, daß die Länge der die Blöcke (6a) der Mittelblockreihen (6) vom benachbarten Mittelband (5) trennenden Nuten (9) bis zu 2/3 der entsprechenden Kantenlänge des jeweiligen Blockes (6a) beträgt.

5. Fahrzeugreifen nach einem der Ansprüche 1 bis 4, dadurch gekennzeichnet, daß die in jedem Mittelband (5) des Laufstreifens verlaufenden Feineinschnitte (11) zumindest im wesentlichen in Profilquerrichtung orientiert sind.

6. Fahrzeugreifen nach einem der Ansprüche 1 bis 5, dadurch gekennzeichnet, daß die in den Blöcken (2) der Schulterblockreihen (1) verlaufenden Feineinschnitte (12) ebenfalls zumindest im wesentlichen in Profilquerrichtung verlaufen und insbesondere mit der Reifenäquatorlinie einen Winkel einschließen, der zwischen 90 und 70° beträgt.

7. Fahrzeugreifen nach einem der Ansprüche 1 bis 6, dadurch gekennzeichnet, daß die Feineinschnitte (13) in den Blöcken (6a) der Mittelblockreihen (6) gegensinnig zu den Feineinschnitten (12) in den Schulterblockreihen (1) verlaufen und mit der Äquatorlinie einen Winkel einschließen, der zwischen 60 und 80° beträgt.

8. Fahrzeugreifen nach einem der Ansprüche 1 bis 7 dadurch gekennzeichnet, daß jene Feineinschnitte (12) in den Blöcken (2) der Schulterblockreihen (1), die den die Quernuten (7) begrenzenden Blockkanten benachbart sind, zu diesen Blockkanten in einem Abstand verlaufen, der insbesondere um das 1,1 - bis 1,4-fache größer ist, als der gegenseitige Abstand der innerhalb dieser Blöcke (2) verlaufenden Feineinschnitte (12).

9. Fahrzeugreifen nach einem der Ansprüche 1 bis 8 mit einem drehrichtungsgebundenen, insbesondere gepfeilt gestalteten Laufstreifenprofil, dadurch gekennzeichnet, daß beim Abrollen des Reifens die Einschnitte (10) vor den Nuten (9) in die Kontaktfläche mit dem Untergrund eintreten.

## Claims

1. Vehicle tyre, more especially for use in wintry travel conditions, having a tread strip profile, which is divided by grooves (3, 4), which extend in the circumferential direction, and by transverse grooves (7, 8), which extend at least into a central band (5), a respective row of central blocks (6) and a respective row of shoulder blocks (1), which rows are each provided with a plurality of fine laminar incisions (11, 12, 13), which are disposed parallel to one another and below one another, characterised in that the blocks (6a) of each row of central blocks (6) are connected, by a groove/incision combination (9, 10), to the central band adjacent said blocks, each groove (9) extending over at least half of the edge length of the pertinent block (6a), and the substantially narrower incision (10) communicating with each groove (8) and extending in the same direction as said groove, which incision has a width of between 1 and 2 mm and a depth of at least 1 mm.

2. Vehicle tyre according to claim 1, characterised in that the depth of the incisions (10) is up to 70 % of the pattern depth, more especially 50 % of the pattern depth.

3. Vehicle tyre according to claim 1 or 2, characterised in that two central bands (5) are provided, which are separated from each other by a circumferential groove (4), the width of each central band corresponding to between 5 % and 8 % of the width (B) of the tyre in the ground supporting surface.

4. Vehicle tyre according to one of claims 1 to 3, characterised in that the length of the grooves (9), which separate the blocks (6a) of the rows of central blocks (6) from the adjacent central band (6) is up to 2/3 of the corresponding edge length of the respective block (6a).

5. Vehicle tyre according to one of claims 1 to 4, characterised in that the fine incisions (11), which extend in each central band (5) of the tread strip, are orientated at least substantially in the transverse direction of the profile.

6. Vehicle tyre according to one of claims 1 to 5, characterised in that the fine incisions (12), which extend in the blocks (2) of the rows of shoulder blocks (1), also extend at least substantially in the transverse direction of the profile and form, more especially with the centre line of the tyre, an angle which is between 90° and 70°.

7. Vehicle tyre according to one of claims 1 to 6, characterised in that the fine incisions (13) in the blocks (6a) of the rows of central blocks (6) extend in the opposite direction to the fine incisions (12) in the rows of shoulder blocks (1) and form, with the centre line, an angle which is between 60° and 80°.

8. Vehicle tyre according to one of claims 1 to 7, characterised in that those fine incisions (12) in the blocks (2) of the rows of shoulder blocks (1) which are adjacent the block edges defining the transverse grooves (7), extend to these block edges at a spacing therefrom, which spacing is greater, more especially by 1.1 to 1.4 times, than the mutual spacing between the fine incisions (12) extending within these blocks (2).

9. Vehicle tyre according to one of claims 1 to 8, having a tread strip profile which is adapted to the direction of rotation and, more especially, has an arrow-shaped configuration, characterised in that, during the rolling of the tyre, the incisions (10) enter the area, which is in contact with the underlying ground, in front of the grooves (9).

## Revendications

1. Pneumatique pour véhicule, notamment destiné à être utilisé dans des conditions de circulation hivernales, comportant une structure de bande de roulement, qui est subdivisée par des rainures (3, 4) s'étendant dans la direction transversale et par des rainures transversales (7, 8) au moins en une bande médiane (5), respectivement une rangée (6) de blocs médians et respectivement une rangée de blocs d'épaulement (1), qui sont pourvus respectivement de fines entailles parallèles (11, 12, 13), caractérisé en ce que les blocs (6a) de chaque rangée (6) de blocs médians sont accouplés par une combinaison rainure/entaille (9, 10) à la bande médiane, qui en est voisine, chaque rainure (9) s'étendant au moins sur la moitié de la longueur d'arête du bloc (6a) considéré, tandis qu'à chaque rainure (9) se raccorde, en s'étendant dans la même direction que cette dernière, l'entaille nettement plus étroite (10), qui possède une largeur de 1 à 2 mm et une profondeur d'au moins 1 mm.

2. Pneumatique pour véhicule selon la revendication 1, caractérisé en ce que la profondeur des entailles (10) est égale jusqu'à 70 % de la profondeur de dessin, notamment 50 % de la profondeur de dessin.

3. Pneumatique selon la revendication 1 ou 2, caractérisé en ce qu'il est prévu deux bandes médianes (5), qui sont séparées l'une de l'autre par une rainure circonférentielle (4) et dont la largeur est comprise respectivement entre 5 et 8 % de la largeur (B) du pneumatique au niveau de la surface d'appui au sol.

4. Pneumatique pour véhicule selon l'une des revendications 1 à 3, caractérisé en ce que la longueur des rainures (9), qui séparent les blocs (6a) de la rangée (6) de blocs médians par rapport à la bande médiane voisine (5), est égale jusqu'au 2/3 de la longueur d'arête correspondante du bloc respectif (6a).

5. Pneumatique pour véhicule selon l'une des revendications 1 à 4, caractérisé en ce que les fines entailles (11), qui s'étendent dans chaque bande médiane (5) de la bande de roulement, sont orientées au moins essentiellement dans la direction transversale de la sculpture.

6. Pneumatique pour véhicule selon l'une des revendications 1 à 5, caractérisé en ce que les fines entailles (12), qui s'étendent dans les blocs (2) des rangées (1) de blocs d'épaulement s'étendent également au moins essentiellement dans la direction transversale de la sculpture et font notamment avec la ligne équatoriale du pneumatique un angle qui est compris entre 90 et 70°.

7. Pneumatique pour véhicule selon l'une des revendications 1 à 6, caractérisé en ce que les fines entailles (13) formées dans les blocs (6c) des rangées (6) de blocs médians s'étendent en sens opposé des fines entailles (12) situées dans les rangées (11) de blocs d'épaulement et font avec la ligne équatoriale un angle qui est compris entre 60 et 80°.

8. Pneumatique pour véhicule selon l'une des revendications 1 à 7, caractérisé en ce que chaque fine entaille (12) formée dans les blocs (2) de la rangée (1) de blocs d'épaulement, qui sont voisins des arêtes de blocs, qui délimitent les rainures transversales (3), s'étendent à une distance de ces arêtes de blocs, qui est notamment 1,1 à 1,4 fois supérieure à la distance réciproque des fines entailles (12) qui s'étendent à l'intérieur de ces blocs (2).

9. Pneumatique pour véhicule selon l'une des revendications 1 à 8, comportant une structure de la bande de roulement, qui est liée au sens de rotation et est agencée notamment avec une forme de flèche, caractérisé en ce que lors du roulement du pneumatique, les entailles (10) pénètrent, en avant des rainures (9), dans la surface de contact avec le sol.
